# EUROPÄISCHE PATENTANMELDUNG

(11) **EP 1 302 929 A1**
(43) Veröffentlichungstag der Anmeldung: **16.04.2003**
(21) Anmeldenummer: 01124718.6
(22) Anmeldetag: 16.10.2001
(51) Int. Cl.: G10L 15/26

(54) **Verfahren zur automatischen Implementierung eines Spracherkenners und Spracherkenner**

(71) Anmelder: SIEMENS AKTIENGESELLSCHAFT, 80333 München (DE)
(72) Erfinder: Schneider, Tobias, Dr., 81825 München (DE)

(57) **Zusammenfassung**

Verfahren zur automatischen Implementierung eines, insbesondere mit einem Hidden-Markov-Modell arbeitenden, Spracherkenners in einer suboptimalen Hardwareumgebung mit vorgegebener Speicher- und Verarbeitungskapazität, wobei ein vorgegebener initialer Spracherkenner durch segmentweise Reduzierung der Anzahl von Prototypenvektoren und/oder Reduzierung der Anzahl von Segmenten in Anpassung an eine Zielapplikation mit begrenztem Wortschatz in einen sekundären, an die vorgegebene Speicher- und Verarbeitungskapazität angepaßten Spracherkenner umgewandelt wird.

## Beschreibung

Die Erfindung betrifft ein Verfahren zur automatischen Implementierung eines Spracherkenners - speziell auf Basis eines Hidden-Markov-Modells (HMM) - sowie einen mit diesem Verfahren erhaltenen Spracherkenner.

Bei der Entwicklung elektronischer Geräte, insbesondere von Endgeräten für die Telekommunikation sowie den verschiedensten computergestützten Geräten, ist eine zunehmende Funktionsvielfalt in Einklang zu bringen mit der Tendenz zu immer weitergehender Miniaturisierung und dem Bestreben, dem Benutzer dennoch eine einfache Bedienung zu ermöglichen. Die etablierten Bedien- bzw. Eingabeverfahren über Schalter, Tastaturen und Dreh- bzw. Schiebesteller sind dabei bei vielen Gerätetypen bereits an ihre Grenzen gestoßen. Miniaturisierte Geräte wie ein Uhrenhandy ("WatchPhone") lassen sich mit diesen Eingabemitteln - insbesondere für ältere Menschen oder Kinder - kaum noch sinnvoll bedienen.

Im Zuge dieser Entwicklung hat die ursprünglich mit PCs eingesetzte Sprachverarbeitung zunehmend Beachtung gefunden, um sie zur einfachen Steuerung solcher Geräte einsetzbar zu machen. Die seit längerem bekannten und inzwischen auf einem hohen Entwicklungsstand angelangten Sprachverarbeitungssysteme auf der Basis von Hidden-Markov-Modellen und neuronalen Netzen sind jedoch auf Computer mit umfangreichen Ressourcen - sowohl in der Speicher- als auch der Verarbeitungskapazität - zugeschnitten. Trotz der zunehmenden "Aufrüstung" handgehaltener und anderer kleinerer elektronischer Geräte steht dort aber nur eine begrenzte Speicher- und Verarbeitungskapazität für Eingabezwecke - und damit auch für einen möglichen Einsatz der Sprachsteuerung - zur Verfügung. Das gilt im übrigen auch für Audio- und Videogeräte sowie Geräte aus dem Bereich der weißen Ware, bei denen aufgrund des allgemeinen Kostendrucks nur begrenzter Aufwand für eine komfortable Steuerung getrieben werden kann.

Spracherkenner, welche auf HMM-Technologie beruhen, modellieren die Sprache in HMM-Modellen. Die akustischen Modelle für die kleinsten Einheiten einer Sprache (hier als Segmente bezeichnet) werden mittels stochastischer Verfahren auf großen Trainingsdatenbanken in einer sehr zeitaufwendigen Prozedur geschätzt und von einem Experten im Labor optimiert. Generell gilt, je aufwendiger die Modellierung, desto größer sind die HMMs, desto besser ist aber auch die spätere Erkennung.

Vereinfacht gesagt, funktioniert die automatische Spracherkennung in drei Blöcken:
1) Merkmalsextraktion: Die Sprachproben werden blockweise analysiert und in einen für die spätere Erkennung günstigen Merkmalsraum transformiert.
2) Abstandsberechnung: Die Merkmalsvektoren werden mit allen im HMM-Modell abgelegten Prototypvektoren (Prototyp: mögliche Ausprägung eines Segments) verglichen und die zugehörigen Distanzen bestimmt.
3) Suche: Aus den Distanzen und dem zugehörigen Vokabular werden Scores für Hypothesen berechnet. Die beste Hypothese gilt.

Der größte Teil der benötigten Rechenleistung wird für die Abstandsberechnung gebraucht. Der größte Anteil des Speichers wird durch das HMM-Modell belegt.

Daher setzt man zur Anpassung eines Spracherkenners an eine vorgegebene Hardware-Architektur üblicherweise bei der Abstandsberechnung und der Struktur des HMM an. Zwei Verfahren sind bekannt:
1) Verringerung der Dimension der Merkmalsvektoren und damit auch Prototypenverktoren im HMM. Das ergibt zur Verringerung der Dimension proportionale Einsparungen an Speicherkapazität und Rechenleistung bei der Abstandsberechnung. Allerdings sind Verluste in der Erkennungsleistung unvermeidlich. Auch sind einer Verkleinerung der Merkmalsvektordimension natürliche Grenzen gesetzt, um eine Diskriminierbarkeit bei der Erkennung zu gewährleisten.
2) Neutrainieren eines HMMs, welches genau an die speziellen Bedürfnisse angepaßt ist. Dies Verfahren führt bei Einsparungen an Ressourcen auch zu Verlusten in der Erkennungsleistung, benötigt Expertenwissen und ist zudem sehr zeitund kostenaufwendig.

Der Erfindung liegt daher die Aufgabe zugrunde, ein verbessertes Verfahren zur Implementierung eines Spracherkenners auf HMM-Basis in einer Hardwareumgebung mit begrenzten Ressourcen anzugeben, welches insbesondere mit möglichst geringen Verlusten an Erkennungsleistung gegenüber einem "optimalen" Spracherkenner arbeiten kann und zu dessen Implementierung ein relativ geringer Aufwand an qualifizierter Arbeitszeit und Kosten erforderlich ist. Weiterhin soll ein entsprechender Spracherkenner angegeben werden.

Diese Aufgabe wird in ihrem Verfahrensaspekt durch ein Verfahren mit den Merkmalen des Anspruchs 1 und in ihrem Vorrichtungsaspekt durch einen Spracherkenner mit den Merkmalen des Anspruchs 10 gelöst.

Vorgeschlagen wird ein Verfahren, welches ausgehend von einem HMM-Modell, welches für den Einsatz in der gewünschten Umgebung (verfügbare CPU-Leistung , Speicher, Speicherorganisation) zu groß ist, dieses in geeigneter Weise automatisch an die Gegebenheiten anpaßt. Dieses Verfahren hat zwei relativ unabhängige Ausprägungen:
1) Die Menge aller Prototypen eines Segments beschreibt eine diskrete Abbildung aller im Training gesehenen Realisationen dieses Segments. Zuerst wird der Speicherplatzbedarf ermittelt, um den das HMM verkleinert werden soll. Danach werden die Prototypenverteilungen segmentweise analysiert und durch geeignetes Zusammenfassen einzelner Prototypenvektoren relativ zu Ihrem Anteil im HMM verkleinert.
   Das Zusammenfassen geschieht im einfachsten Fall durch eine Mittelung, zweckmäßigerweise kommen hier aber aufwendigere Clusterverfahren zur Anwendung. Beide Vorgehensweisen sind dem Fachmann an sich bekannt und bedürfen daher hier keiner genaueren Beschreibung.
   Dieses Verfahren kann in mehreren Schritten angewendet werden und beginnt mit den zueinander am nächsten liegenden Vektoren eines Segments. Als Abstandsmaß zur Ermittlung der Nähe zweier Prototypvektoren empfiehlt sich das Abstandsmaß aus der Abstandsberechnung des Erkenners (typisch euklidische Distanz oder Abstandsbetrag). Das resultierende HMM kommt mit der Speicherkapazität und -organisation der Umgebung aus. Auch hier treten Verluste in der Erkennungsleistung auf, das Verfahren kann aber im Unterschied zu der bekannten Vorgehensweise automatisiert und vom Integrator durchgeführt werden.
2) Das zweite Verfahren benutzt Informationen über die möglichen Wortschätze in der Zielapplikation. Es ist vor allem für solche Hardwarearchitekturen geeignet, bei denen relativ viel externer Speicher zur Verfügung steht, der von der CPU direkt adressierbare Arbeitsspeicher aber zu klein ist, um ein ganzes HMM aufzunehmen.

Ein HMM beinhaltet alle möglichen Untereinheiten einer Sprache. Ist der Wortschatz des Erkenners beschränkt, werden aber nicht alle Untereinheiten benötigt. Vorgeschlagen wird für diesen Fall, alle Segmente aus dem HMM zu entfernen, welche für den Zielwortschatz nicht benötigt werden. Dies führt zu einer Verringerung der benötigten Speicherkapazität und Rechenleistung, ohne Verluste in der Erkennungsleistung hinnehmen zu müssen. Ist das so verkleinerte HMM immer noch zu groß für die vorgegebene Hardware, wird nach Durchführung dieses Schrittes wie unter 1) beschrieben vorgegangen. Man minimiert durch diese zweistufige Vorgehensweise die unvermeidlichen Verluste an Erkennungsleistung bzw. -genauigkeit durch die Verkleinerung des HMMs.

Optimal ist es, die beiden vorgeschlagenen Methoden in Kombination mit der Reduktion der Dimension des Merkmalsvektors zu verwenden.

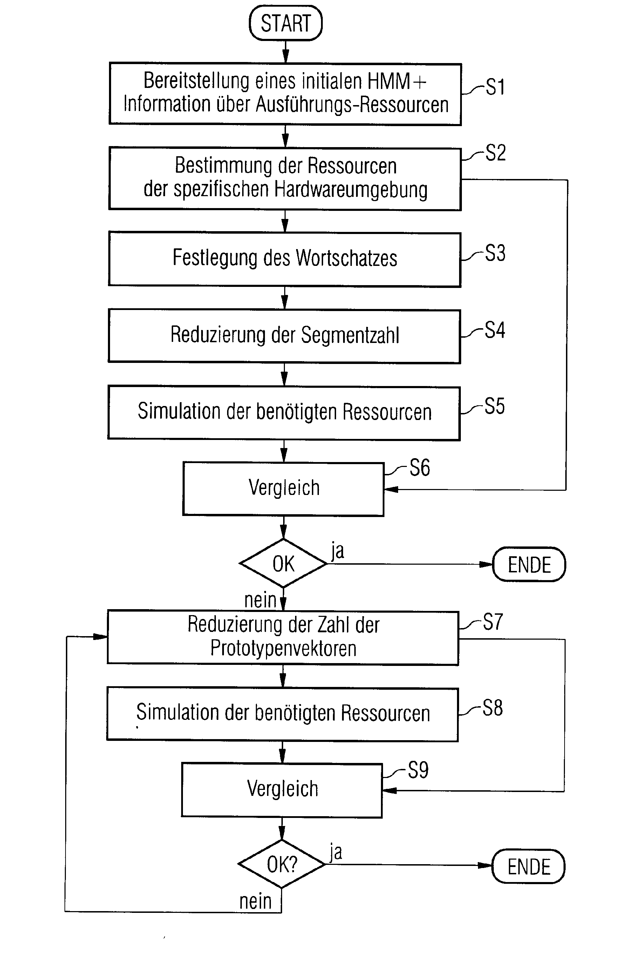

Vorteile und Zweckmäßigkeiten der Erfindung ergeben sich im übrigen aus den Unteransprüchen sowie der nachfolgenden Beschreibung eines bevorzugten Ausführungsbeispiels anhand der einzigen Figur. Diese zeigt ein - stark vereinfachtes - Flußdiagramm zur Erläuterung einer Ausführungsform des erfindungsgemäßen Verfahrens.

Das Verfahren beginnt mit der Bereitstellung eines initialen ("optimalen") Spracherkenners, der beispielsweise auf einen universellen Steuerwortschatz zur Steuerung verschiedenster technischer Geräte trainiert wurde (Schritt S1). Bekannt sind in diesem Schritt auch der Umfang des vom Spracherkenner beherrschten Wortschatzes und die zu seinem uneingeschränkten Betrieb erforderlichen Ressourcen (Rechenleistung sowie Arbeitsspeicherkapazität und externe Speicherkapazität sowie Speicherorganisation).

In einem Schritt S2 werden die Randbedingungen für die Implementierung eines angepaßten Spracherkenners in einer Hardwareumgebung mit eingeschränkten Ressourcen, beispielsweise einem handgehaltenen elektronischen Gerät, bestimmt, und in einem Schritt S3 wird der Wortschatz der konkreten Applikation festgelegt. Der Spracherkenner bildet in der Anwendung beispielsweise eine Menüstruktur nach, so dass sein aktiver Wortschatz z. B. für fünf Menüpunkte auf 5 mal 10 Worte beschränkt ist. Die Rechenleistung und Speicherkapazität entspricht derjenigen, die in einem Mobiltelefon, PDA o. ä. für Eingabezwecke zur Verfügung steht.

Man verkleinert nun in einem Schritt S4 das vorhandene HMM mit der obigen Methode 2 und simuliert in einem Schritt S5, welche Ressourcen hierfür benötigt werden. In einem Schritt S6 wird das Ergebnis mit dem des Schritts S2 verglichen und so festgestellt, ob die neue Größe paßt. Ist das der Fall, ist das Verfahren beendet. Ist dies nicht der Fall, wird in einem Schritt S7 mit der Methode 1 weiter verkleinert. Dann wird in Schritten S8 und S9 mit einer entsprechenden Simulationsrechnung und einem Vergleich nochmals geprüft, ob die zur Realisierung des nun gefundenen HMM benötigten Ressourcen an Rechenleistung und Speicherkapazität den vorgegebenen Ressourcen entsprechen. Ist das HMM nun passend, ist man am Ziel, ansonsten wird das Verfahren ab Schritt S7 wiederholt.

Das Verfahren wendet man für jedes Untermenü an, in unserem Beispiel also insgesamt fünfmal, und man erhält so für jedes Untermenü ein geeignetes HMM. Diese neuen HMMs werden in dem externen Speicher abgelegt. Kommt nur die Methode 2 zur Anwendung, genügt es auch, die zu jedem Untermenü gehörenden Segmentindizes zu vermerken und nur das Anfangs-HMM in den externen Speicher zu legen. Bei Wechsel der Untermenüs kann dann gemäß der gemerkten Indizes ein Untermenü-HMM im internen Speicher generiert werden.

Falls auch die neue Methode 1 verwendet wird, muß, wenn die Spracherkennung aktiv ist, das zum jeweiligen Zustand (Untermenü) gehörige HMM in den internen Speicher geladen werden, oder blockweise aus dem externen Speicher in den internen Speicher transferiert werden.

Die Erfindung ist nicht auf dieses Ausführungsbeispiel und die oben hervorgehobenen Aspekte beschränkt, sondern ebenso in einer Vielzahl von Abwandlungen möglich, die im Rahmen fachgemäßen Handelns liegen.

## Patentansprüche

1. Verfahren zur automatischen Implementierung eines, insbesondere mit einem Hidden-Markov-Modell arbeitenden, Spracherkenners in einer suboptimalen Hardwareumgebung mit vorgegebener Speicher- und Verarbeitungskapazität, wobei ein vorgegebener initialer Spracherkenner durch segmentweise Reduzierung der Anzahl von Prototypenvektoren und/oder Reduzierung der Anzahl von Segmenten in Anpassung an eine Zielapplikation mit begrenztem Wortschatz in einen sekundären, an die vorgegebene Speicher- und Verarbeitungskapazität angepaßten Spracherkenner umgewandelt wird.

2. Verfahren nach Anspruch 1,
**dadurch gekennzeichnet, daß**
die Reduzierung der Anzahl der Prototypenvektoren durch segmentweise Mittelung erfolgt, wobei das Verfahren bei den einander am nächsten liegenden Prototypenvektoren des jeweiligen Segments gestartet wird.

3. Verfahren nach Anspruch 1,
**dadurch gekennzeichnet, daß**
die Reduzierung der Anzahl der Prototypenvektoren durch segmentweise Anwendung eines Clusterverfahrens erfolgt, wobei das Verfahren bei den einander am nächsten liegenden Prototypenvektoren des jeweiligen Segments gestartet wird.

4. Verfahren nach Anspruch 2 oder 3,
**dadurch gekennzeichnet, daß**
als Abstandsmaß zur Kennzeichnung der Nähe zweier Prototypenvektoren ein Abstandsmaß aus der Abstandsberechnung des initialen Spracherkenners, insbesondere die euklidische Distanz oder der Abstandsbetrag, verwendet wird.

5. Verfahren nach einem der vorangehenden Ansprüche,
**dadurch gekennzeichnet, daß**
eine Beschränkung des Wortschatzes des initialen Spracherkenners um vorbestimmte Teile definiert wird und die den vorbestimmten Teilen zugeordneten Segmente aus dem initialen Spracherkenner entfernt werden.

6. Verfahren nach einem der vorangehenden Ansprüche,
**dadurch gekennzeichnet, daß**
iterativ eine Folge von Schritten der Reduzierung der Anzahl der Prototypenvektoren und/oder der Anzahl der Segmente ausgeführt wird, wobei nach jedem Schritt der resultierende Bedarf an Speicher- und Verarbeitungskapazität simuliert und mit der vorgegebenen Speicher- und Verarbeitungskapazität verglichen und im Ergebnis des Vergleiches ein Steuersignal zur Beendigung des Verfahrens oder zum Start eines nächsten Reduzierungsschrittes ausgegeben wird.

7. Verfahren nach einem der vorangehenden Ansprüche,
**dadurch gekennzeichnet, daß**
in einem ersten Verfahrensabschnitt die Anzahl der Segmente und in einem zweiten Verfahrensabschnitt in den verbleibenden Segmenten die Anzahl der Prototypenvektoren reduziert wird.

8. Verfahren nach Anspruch 6 und 7,
**dadurch gekennzeichnet, daß**
der erste und zweite Verfahrensabschnitt sequentiell mehrfach wiederholt werden.

9. Verfahren nach einem der vorangehenden Ansprüche,
**dadurch gekennzeichnet, daß**
die segmentweise Reduzierung der Anzahl der Prototypenvektoren und/oder die Reduzierung der Anzahl der Segmente in Kombination mit einer Reduzierung der Dimension des Merkmalsvektors ausgeführt wird.

10. Spracherkenner auf Basis eines Hidden-Markov-Modells, der zum Einsatz in einer suboptimalen Hardwareumgebung eine gegenüber einem optimalen Trainingszustand reduzierte Anzahl von Prototypenvektoren in wenigstens einigen Segmenten und/oder eine reduzierte Anzahl von Segmenten aufweist.

11. Spracherkenner nach Anspruch 10, **gekennzeichnet durch**
eine gegenüber dem initialen Trainingszustand reduzierte Dimension des Merkmalsvektors.
